# EUROPÄISCHE PATENTSCHRIFT

(11) **EP 0 327 796 B1**
(45) Veröffentlichungstag und Bekanntmachung des Hinweises auf die Patenterteilung: **01.09.1993**
(21) Anmeldenummer: 89100080.4
(22) Anmeldetag: 04.01.1989
(51) Int. Cl.: C08G 77/54, C08G 77/58, B01J 20/00

(54) **Geformte polymere Organosiloxan-Ammoniumverbindungen, Verfahren zu ihrer Herstellung und Verwendung**
Shaped polymeric organosiloxane-ammonium compounds, process for their preparation and their use
Polymères ayant une forme précise et à base de composés d'organosiloxane contenant des groupes d'ammonium, procédé pour leur préparation et leur emploi

(30) Priorität: 12.01.1988 DE 3800564
(43) Veröffentlichungstag der Anmeldung: 16.08.1989
(73) Patentinhaber: Degussa Aktiengesellschaft, 60311 Frankfurt (DE)
(72) Erfinder: Panster, Peter, Dr., D-6458 Rodenbach (DE); Kleinschmit, Peter, Dr., D-6450 Hanau 9 (DE)

(56) Entgegenhaltungen:
- EP-A- 0 151 991
- DE-A- 2 433 409
- DE-A- 3 120 195

## Beschreibung

Gegenstand der Erfindung sind kugelförmige polymere Organosiloxan-Ammoniumverbindungen, die gegenüber bereits bekannten Organosiloxan-Ammoniumverbindungen die verfahrens- sowie anwendungstechnischen Vorteile makroskopischer Kugelform haben. Gleichzeitig werden Verfahren beschrieben, nach denen die neuen Produkte nicht nur in der für die jeweilige Anwendung idealen Kugelgröße, sondern auch mit geeigneten physikalischen Eigenschaften hergestellt werden können. Weiterhin werden Verfahren zur Verwendung dieser geformten Organosiloxan-Ammoniumverbindungen aufgezeigt.

In der DE-A-31 20 195 sind polymere Organosiloxan-Ammoniumverbindungen beschrieben, die z.B. als stark basische Ionenaustauscher, Adsorber, Katalysatorträger, Wirkstoffträger allgemein oder heterogene Phasentransferkatalysatoren verwendet werden können. Diese unlöslichen Ammoniumsysteme besitzen gegenüber vergleichbaren Systemen auf Basis organischer Polymerer, wie sie z. B. in Ullmanns Enzyklopädie der technischen Chemie, 4. Auflg., Bd. 13, S. 279 beschrieben sind, die Vorteile der höheren thermischen, mechanischen und chemischen Stabilität und ihre physikalischen Eigenschaften sowie Struktur ist weitgehend unabhängig von äußeren Parametern wie Druck, Temperatur und Umgebung.

Gegenüber unlöslichen Ammoniumverbindungen, die durch eine sog. Trägerfixierung, d. h. Anbindung von geeigneten Ammoniumgruppierungen an anorganische Träger erhalten werden und damit grundsätzlich auch über eine anorganische Matrix verfügen, weisen die Organosiloxan-Ammoniumverbindungen vor allem den Vorteil der höheren Ammoniumgruppen-Kapazität auf (vgl. DE-A-24 33 409).

Die Matrix dieser Organopolysiloxane läßt sich den jeweiligen Bedürfnissen der verschiedenen Anwendungen anpassen, z. B. in der Weise, daß die Ammoniumgruppen-Dichte durch den Einbau sog. Vernetzergruppen des Siliciums, Titans, Zirkoniums und Aluminiums gesteuert oder auch die Porosität beeinflußt werden kann. Sowohl chemisch als auch physikalisch lassen sich diese Produkte somit sehr weit variieren. Aus anwendungstechnischer Sicht bestand ihr einziger Nachteil bis jetzt darin, daß sie nur in stückiger oder pulvriger Form und nicht in der für viele technische Einsatzgebiete erforderlichen Kugelform erhalten werden konnten.

Aufgabe der Erfindung war daher, diese unlöslichen Organosiloxan-Ammoniumverbindungen in Kugelform zu überführen, wobei jedoch sichergestellt werden mußte, daß gleichzeitig auch die gewünschten physikalischen Eigenschaften gewährleistet werden.

Gegenstand der Erfindung sind die in den Stoffansprüchen gekennzeichneten Produkte. Sie bestehen makroskopisch aus kugelförmigen Teilchen mit einem Durchmesser von 0,01 bis 3,0 mm, vorzugsweise 0,1 bis 2,5 mm, einer spezifischen Oberfläche von 0 bis 1000 m²/g, vorzugsweise 0 bis 700 m²/g, einem spezifischen Porenvolumen von 0 bis 5,0 ml/g, vorzugsweise 0 bis 3,0 ml/g, einer Schüttdichte von 50 bis 1000 g/l, vorzugsweise 100 bis 900 g/l und einer volumenbezogenen Trockensubstanz von 50 bis 750 g/l, vorzugsweise 100 - 700 g/l.

Der Begriff "volumenbezogene Trockensubstanz" ist in der DIN-Vorschrift 54 408 definiert. Er gibt den Gehalt an Trockensubstanz in einem Liter Feuchtprodukt an und wird gemeinhin zur Charakterisierung von Ionenaustauschern verwendet. Aus der volumenbezogenen Trockensubstanz läßt sich über die theoretische Gewichtskapazität die für den praktischen Einsatz relevante theoretische Volumenkapazität errechnen.

Es hat sich gezeigt, daß R⁵ eine lineare oder verzweigte Alkylengruppe sein kann, ohne daß erhebliche stoffliche Unterschiede des Endprodukts auftreten.

Typische Beispiele für Einheiten erfindungsgemäßer polymerer Organosiloxan-Ammoniumverbindungen sind

[(H₃C)₂N(CH₂SiO_{3/2})₂]⁺Cl⁻

{(H₃C)N[(CH₂)₁₀SiO_{3/2}]₃}⁺ OH⁻

[HN(CH₂CH₂SiO_{3/2})₃]⁺ NO₃⁻

Besonders bevorzugt vom Gesichtspunkt der thermischen Stabilität und Inertness gegenüber chemischen Angriffen, insbesondere durch Basen sowie hinsichtlich Unlöslichkeit, sind die polymeren geformten Ammoniumverbindungen nach Formel (I), in welcher R¹, R² und R³ die gleiche Bedeutung haben. Nach einer vorzugsweisen Ausführungsform der Erfindung sind R¹, R² und R³ identisch, R⁴ ist der Methylrest und X ist Chlorid, Bromid, Jodid.

Besondere Vorteile bezüglich der Verfügbarkeit der Ausgangsmaterialien und der stofflichen Eigenschaften der geformten polymeren Ammoniumverbindung liegen bei einer Verbindung, aufgebaut aus Polymereinheiten der Formel

[(H₃C)N(CH₂CH₂CH₂SiO_{3/2})₃]⁺Cl⁻

vor.

Ein besonders wichtiger Gegenstand der Erfindung sind Verfahrensmaßnahmen zur Herstellung der geformten Organosiloxan-Ammoniumverbindungen. Das grundsätzliche Verfahren sieht vor, daß man eine gemäß den Präparationstechniken der parallel eingereichten deutschen Patentanmeldung P 38 00 563.8 vom selben Anmeldetag erhältliche geformte, kugelförmige polymere Organosiloxanaminverbindung quartärisiert. Im einzelnen besteht dieses erfindungsgemäße Verfahren darin, daß man ein sekundäres oder ein tertiäres Aminosilan der allgemeinen Formel 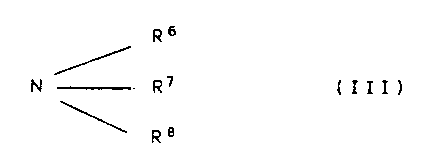
in welcher R⁶ und R⁷ gleich oder verschieden sind und eine Gruppe der allgemeinen Formel

- R⁵ - Si(OR⁹)₃ (IV)

bedeuten,
R⁵ dieselbe Bedeutung wie in Formel (II) hat,
R⁹ eine lineare oder verzweigte Alkylgruppe mit 1 bis 5 C-Atomen und
R⁸ gleich R⁶ und R⁷ oder Wasserstoff, eine lineare oder verzweigte Alkylgruppe mit 1 bis 10 C-Atomen, eine aus 5 bis 8 C-Atomen bestehende Cycloalkylgruppe oder die Benzylgruppe ist,
gegebenenfalls nach Zusatz einer oder mehrerer Vernetzer der allgemeinen Formel

M(OR)₂₋₄R'₀₋₂

bzw.

Al(OR)₂₋₃R'₀₋₁

wobei M ein Silicium-, Titan- oder Zirkonatom, R' eine lineare oder verzweigte Alkylgruppe mit 1 bis 5 C-Atomen ist, und das Verhältnis der Siliciumatome aus den Gruppen der allgemeinen Formel (IV) zu den Metallatomen in den Vernetzern 1 : 0 bis 1 : 10 beträgt, in einem weitgehend wassermischbaren, aber Aminoorganosilan und Vernetzer lösenden üblichen Lösungsmittel auflöst, der Lösung unter Rühren eine zumindest für die vollständige Hydrolyse und Kondensation ausreichende Menge Wasser zufügt, das Reaktionsgemisch unter Weiterrühren bei einer bestimmten Temperatur im Bereich von Raumtemperatur bis 200° C unter der Maßgabe gelieren läßt, daß es bei Gelierungsbeginn oder bis zu einer Stunde danach mit 10 bis 2000 Gew. %, vorzugsweise 50 bis 500 Gew.%, bezogen auf die Gesamtmenge von Aminoorganosilan (III) und gegebenenfalls Vernetzer, eines weitgehend wasserunlöslichen, aber die (an)gelierte Reaktionsmischung lösenden üblichen Lösungsmittels versetzt und homogenisiert wird, dem viskosen Homogenisat sofort oder im Zeitraum bis zu einer Stunde, gegebenenfalls unter Erhöhung der ursprünglich eingestellten Temperatur, 10 bis 2000 Gew.%, vorzugsweise 50 bis 1000 Gew.%, bezogen auf die Gesamtmenge Aminoorganosilan und gegebenenfalls Vernetzer, Wasser zugibt, die jetzt Siloxan enthaltende organische Phase in dem flüssigen Zweiphasensystem dispergiert und den sich in Form von Kugeln bildenden Feststoff nach dafür ausreichender Reaktionszeit bei Raumtemperatur bis 200° C von der flüssigen Phase abtrennt und dann gegebenenfalls extrahiert, bei Raumtemperatur bis 250° C, gegebenenfalls unter Schutzgas oder im Vakuum trocknet und 1 bis 100 Stunden bei Temperaturen von 150 bis 300°C tempert und/oder klassifiziert, das so erhältliche polymere, geformte Organosiloxanamin der allgemeinen Formel 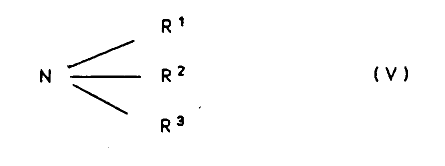
wobei R¹, R² und R³ dieselbe Bedeutung haben wie in Formel (I), mit einer stöchiometrischen, bevorzugt überschüssigen Menge
a) eines aus 1 bis 20 C-Atomen bestehenden, linearen oder verzweigten Alkylhalogenids, eines aus 5 bis 8 C-Atomen bestehenden Cycloalkylhalogenids oder Benzylhalogenids, in dem der Halogenrest ein Chlor-, Brom- oder Jodatom ist, oder
b) einer anorganischen oder organischen Protonensäure,
gegebenenfalls in Anwesenheit eines Lösungsmittels bzw. Lösungsvermittlers aus der Gruppe der cyclischen oder offenkettigen Ether, der Chlorkohlenwasserstoffverbindungen, der aliphatischen oder aromatischen Nitroverbindungen, der aliphatischen oder aromatischen Nitrile, der offenkettigen oder cyclischen aliphatischen Kohlenwasserstoffe, der unsubstituierten oder mit Alkylgruppen substituierten Aromaten, der linearen oder verzweigten Alkohole mit 1 bis 12 C-Atomen, der symmetrischen oder unsymmetrischen Ketone mit 3 bis 8 C-Atomen oder von Dimethylformamid, Dimethylsulfoxid oder von Wasser, bei Temperaturen von Raumtemperatur bis 250° C und einem Druck, welcher der Summe der Partialdrucke der Komponenten der Reaktionsmischung bei der jeweiligen Temperatur entspricht, über einen Zeitraum von wenigen Minuten bis zu mehreren Tagen umsetzt, das gebildete Polymere geformte Organosiloxan-Ammoniumprodukt gegebenenfalls zunächst von gasförmigen Komponenten befreit, dann nach gängigen Aufarbeitungsmaßnahmen von der flüssigen Phase abtrennt, mit einem der genannten Lösungsmittel oder mit Wasser wäscht oder extrahiert, gegebenenfalls in dem Lösungsmittel bei erhöhter Temperatur behandelt, das von Lösungsmittel getrennte Produkt bei Normaldruck, unter Vakuum oder unter Schutzgas teilweise oder vollständig bei einer Temperatur von Raumtemperatur bis 250° C während 1 bis 60 Stunden trocknet, bei 100 bis 300° C über einen Zeitraum von bis zu 100 Stunden tempert und klassifiziert, wobei jedoch die Reihenfolge dieser gängigen Aufarbeitungsmaßnahmen variieren kann.

Eine bevorzugte Verfahrensvariante sieht vor, daß das geformte polymere Amin der Formel (V) mit einem aus 1 bis 20 C-Atomen bestehenden linearen oder verzweigten Alkylhalogenid, einem aus 5 bis 8 C-Atomen bestehenden Cycloalkylhalogenid oder mit Benzylhalogenid, in dem der Halogenrest gleich Chlor-, Brom- oder Jodatom ist, ungetrocknet lösungsmittelfeucht, unmittelbar nach seiner Bildung quartärisiert wird.

Diese Variante wird also bei Quartärisierungen mit Quartärisierungsagenzien der Klasse a) bevorzugt angewendet. Im Falle der Umsetzung des Amins der Formel (V) mit Protonensäuren (Quartärisierungsagenzien der Klasse b)) kann aber auch eine vorherige Trocknung stattgefunden haben.

Im Fall des Einsatzes von Quartärisierungsagenzien der Klasse a) genügen prinzipiell stöchiometrische Mengen, um eine vollständige Überführung des Amins nach Formel (V) in eine Ammoniumverbindung nach Formel (I) zu erreichen.

Im Hinblich auf eine raschere Durchführung der Quartärisierungsreaktion ist jedoch eine Überschuß an Quartärisierungsagens vorzuziehen. Dieser Überschuß kann beliebig gewählt werden, wobei im Extremfall auch das Quartärisierungsagens als Lösungsmittel verwendet werden kann. Grundsätzlich ist jedoch für die Quartärisierungsgeschwindigkeit auch die Wahl des Halogenrestes wichtig, nachdem bekanntlich die Umsetzungsgeschwindigkeit in der Reihenfolge Cl⁻, Br⁻, J⁻ ansteigt.

Analoges gilt auch für den Einsatz der unter Klasse b) fallenden Protonensäuren, die jedoch grundsätzlich schneller als die Agentien der Klasse a) reagieren.

Unter den gruppen der genannten Lösungsmittel, die für die Durchführung der Quartärisierungsreaktion mit Quartärisierungsagenzien der Klasse a) in Frage kommen, werden solche bevorzugt, die schon bei der Herstellung der Vorstufe, nämlich des geformten Organosiloxanamins der Formel (V), anwesend waren.

Unter diesem technisch praktischen Aspekt nehmen Lösungsmittel, wie lineare oder verzweigte Alkohole mit 1 bis 10 C-Atomen oder Toluol, o-, m-, p-Xylol oder Gemische daraus, eine Ausnahmestellung ein. Dies gilt insbesondere dann, wenn das Organosiloxanamin nach Formel (V) lösungsmittelfeucht quartärisiert wird.

Bei der Protonierung des kugelförmigen polymeren Organosiloxanamins mit anorganischen oder organischen Protonensäuren, bei der das Organosiloxanamin sowohl lösungsmittelfeucht als auch getrocknet eingesetzt werden kann, kann grundsätzlich ebenfalls auf die Verwendung eines Lösungsmittels verzichtet werden. Soll jedoch ein Lösungsmittel verwendet werden, so ist dieses unter Berücksichtigung der speziellen Natur der Säure zu wählen. Sofern es sich um eine leicht handhabbare, bei Raumtemperatur flüssige Säure handelt, wird diese bevorzugt in Reinsubstanz eingesetzt. Im anderen Fall können Lösungen in Wasser und linearen oder verzweigten Alkoholen mit 1 bis 10 C-Atomen verwendet werden.

Bei Einsatz von Quartärisierungsagenzien der Klasse a) liegen die bevorzugten Quartärisierungstemperaturen bevorzugt oberhalb Raumtemperatur, da erhöhte Temperaturen, analog wie bei üblichen Quartärisierungen, die Reaktionsgeschwindigkeit deutlich erhöhen. Eine Erhöhung der Reaktionstemperaturen kann im Falle leichtsiedender Quartärisierungsagenzien mit Druckanstieg über Normaldruck verbunden sein. Zwischen der Art des Quartärisierungsagens, der Quartärisierungstemperatur und -dauer besteht ein grundsätzlicher Zusammenhang in der Weise, daß bei sterisch sperrigeren Alkyl-, Cycloalkyl- oder Benzylhalogeniden höhere Reaktionstemperaturen und längere Reaktionszeiten anzusetzen sind.

Dasselbe gilt grundsätzlich auch für die Quartärisierungsagenzien Protonensäuren, wobei diese im allgemeinen schon bei Raumtemperatur rasch und vollständig abreagieren.

Eine Abtrennung von gasförmigen Komponenten nach vollzogener Umsetzung kann notwendig werden, wenn Quartärisierungsagenzien verwendet werden, die bei Raumtemperatur gasförmig sind, wie z. B. Methylchlorid, oder wenn bei höheren Quartärisierungstemperaturen geringe Mengen gasförmiger Nebenprodukte gebildet werden.

Die Abtrennung des Quartärisierungsproduktes von der flüssigen Phase kann durch gebräuchliche Techniken, wie Dekantieren, Filtrieren, Zentrifugieren oder Absaugen erfolgen.

Eine besondere Variante des erfindungsgemäßen Verfahrens sieht vor, daß das von gasförmigen Komponenten und von der flüssigen Phase befreite, aber noch feuchte Quartärisierungsprodukt vor einer Extraktion noch einer Temperaturbehandlung über einen Zeitraum bis zu 100 Stunden bei Temperaturen bis zu 200° C, in einem der zur Quartärisierung vorgeschlagenen Lösungsmittel, das gegebenenfalls mit Halogenwasserstoffsäure angesäuert wird, unterworfen wird. Durch diese Behandlung können die mechanischen Eigenschaften des kugelförmigen Organosiloxanamins weiter verbessert werden.

Ein Waschen bzw. Extrahieren des gebildeten Produktes vor einer anschließenden Trocknung kann sich dann als vorteilhaft erweisen, wenn bei der Quartärisierung ein hochsiedendes Lösungsmittel verwendet wird oder durch das noch lösungsmittelfeuchte geformte Amin in die Raktionsmischung eingeschleppt wird, das sich bei der anschließenden Trocknung nicht entfernen läßt.

Die Maßgabe der Temperung nach der Trocknung dient einer Erhöhung der mechanischen Stabilität der geformten Organosiloxan-Ammoniumverbindung.

Nach einer besonderen Variante wird die gebildete Organosiloxan-Ammoniumverbindung gemäß Formel (I) nach vollzogener Ouartärisierung nicht getrocknet, sondern nach dem Waschen mit Wasser oder einem anderen Lösungsmittel direkt der weiteren Verwendung zugeführt. In diesen Fällen ist unter den Quartärisierungsbedingungen das in Form von Kugeln vorliegende Produkt bereits so gefestigt worden, daß auf die Trocknung verzichtet werden kann.

Die kugelförmigen polymeren gegebenenfalls vernetzten Organosiloxanammoniumverbindungen mit kieselsäureartigem Grundgerüst sind ebenfalls Gegenstand der Erfindung. Sie bestehen aus Einheiten der allgemeinen Formel 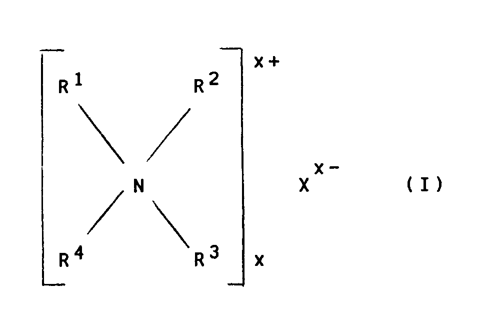
in welcher R¹ und R² gleich oder verschieden sind und eine Gruppe der allgemeinen Formel 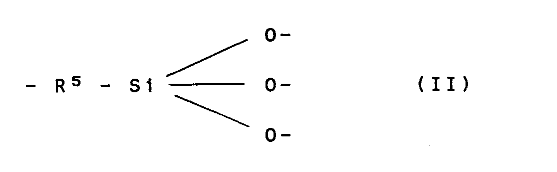
bedeuten, wobei die Stickstoffatome in (1) über die Reste R⁵ mit den Siliciumatomen in (II) verbunden sind und R⁵ eine Alkylengruppe mit 1 bis 10 C-Atomen, eine Cycloalkylengruppe mit 5 bis 8 C-Atomen oder eine Einheit der allgemeinen Formel 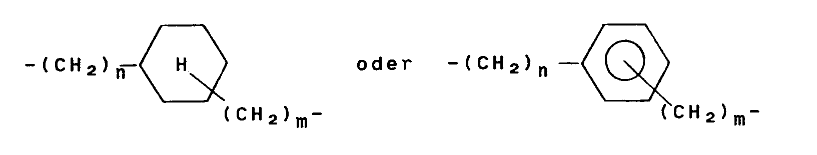
darstellt, in der
n eine Zahl von 1 bis 6 ist und die Zahl der stickstoffständigen Methylengruppen angibt und
m eine Zahl von 0 bis 6 ist,
und wobei die freien Valenzen der an das Siliciumatom gebundenen Sauerstoffatome wie bei Kieselsäuregerüsten durch Siliciumatome weiterer Gruppen der Formel (II) und/oder mit den Metallatomen einer oder mehrerer der vernetzenden Brückenglieder 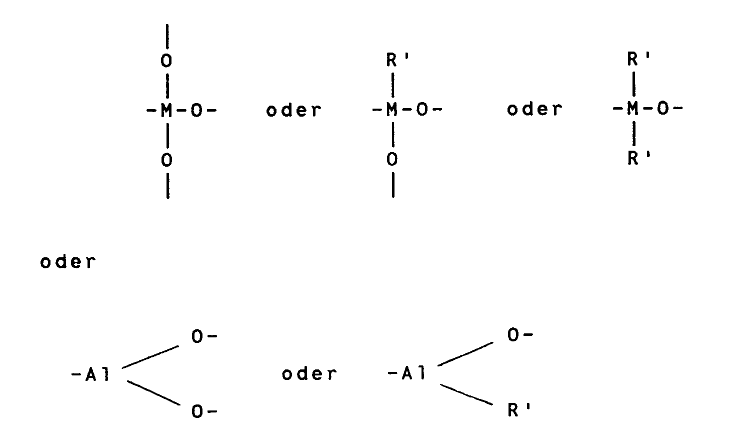
abgesättigt sind, wobei M ein Silicium-, Titan- oder Zirkoniumatom und R'eine lineare oder verzweigte Alkylgruppe mit 1 bis 5 C-Atomen ist und das Verhältnis der Siliciumatome aus den Gruppen der allgemeinen Formel (2) zu den Metallatomen in den Brückengliedern 1 : 0 bis 1 : 10 beträgt, und in welcher R³ gleich R¹ oder R² oder Wasserstoff, eine lineare oder verzweigte Alkylgruppe aus 1 bis 20 C-Atomen, eine aus 5 bis 8 C-Atomen bestehende Cycloalkylgruppe oder die Benzylgruppe ist und
R⁴ gleich Wasserstoff, eine lineare oder verzweigte Alkylgruppe mit 1 bis 20 C-Atomen oder eine aus 5 bis 8 C-Atomen bestehende Cycloalkyl-, Benzyl-, Allyl-, Propargyl-, Chlorethyl-, Hydroxyethyl-, Chlorpropylgruppe und
X ein Anton mit der Wertigkeit von x gleich 1 bis 3 aus der Gruppe Halogenid, Hypochlorit, Sulfat, Hydrogensulfat, Nitrit, Nitrat, Phosphat, Dihydrogenphosphat, Hydrogenphosphat, Carbonat, Hydrogencarbonat, Hydroxid, Chlorat, Perchlorat, Chromat, Dichromat, Cyanid, Cyanat, Rhodanid, Sulfid, Hydrogensulfid, Selenid, Tellurid, Borat, Metaborat, Azid, Tetrafluoroborat, Tetraphenylborat, Hexafluorophosphat, Formiat, Acetat, Propionat, Oxalat, Trifluoroacetat, Trichloracetat oder Benzoat ist,
und besitzen einen Durchmesser von 0,01 bis 3,0 mm, eine spezifische Oberfläche bis 1000 m²/g, ein spezifisches Porenvolumen bis 5,0 ml/g, eine Schüttdichte von 50 bis 1000 g/l sowie eine volumenbezogene Trockensubstanz von 50 bis 750 g/l.

Alle geformten polymeren Ammoniumverbindungen, die nicht durch direkte Ouartärisierung des geformten polymeren Amins erhalten werden können, also solche, bei denen das quartäre Stickstoffatom vollständig mit Organylgruppen substituiert ist und X für ein Anion gemäß Formel (I), jedoch nicht für Halogenid steht, sind in der Weise zugänglich, daß man die durch direkte Quartärisierung erhaltene geformte, ungetrocknete, getrocknete und/oder getemperte polymere Organosiloxan-Ammoniumverbindung mit einem anorganischen oder organischen Reagenz, welches in ein Kation und Anion dissoziieren kann, zum gegenseitigen Austausch der Anionen nach dem statischen oder dynamischen Ionenaustauscherprinzip umsetzt.

Dieses Ionenaustauschverfahren beinhaltet auch einen Ionenaustausch in Gestalt einer Neutralisation, wie er bei bereits bekannten Ionenaustauscherharzen nach dem statischen oder dynamischen Prinzip vollzogen werden kann.

Man kann also den Ionenaustausch in einer bewegten Suspension der geformten polymeren Ausgangs-Ammoniumverbindung mit dem zumindest teilweise gelösten Reaktionspartner durchführen. Dabei wird die unlösliche polymere Ammoniumverbindung in wäßriger Suspension oder einem organischen Suspensionsmedium bevorzugt polarer Natur mit derjenigen, wenigstens teilweise gelösten Reaktionskomponente, mit der der Austausch durchgeführt werden soll, in Kontakt gebracht. Anschließend wird der geformte Feststoff abgetrennt und gegebenenfalls nochmals mit frischer Lösung des Reaktionspartners gerührt. Dieser Vorgang wird so oft wiederholt, bis der Ionenaustausch quantitativ vollzogen ist. Anschließend kann der Feststoff salzfrei gewaschen, nach gängigen Techniken, wie Filtrieren, Zentrifugieren und/oder Dekantieren, abgetrennt, gewaschen, bei Raumtemperatur oder erhöhter Temperatur bis 250° C, gegebenenfalls unter Verwendung von Vakuum oder unter Schutzgasatmosphäre getrocknet, bei einer Temperatur von 100 - 300° C über einen Zeitraum von bis zu 100 Stunden, gegebenenfalls unter Schutzgasatmosphäre oder im Vakuum getempert und anschließend in verschiedene Korngrößen klassifiziert werden. Einzelne der genannten Maßnahmen können unterbleiben oder in einer anderen Reihenfolge durchgeführt werden.

Arbeitet man nach dem dynamischen Prinzip, so setzt man die polymere Ausgangsammoniumverbindung als Austauscherbett ein, das gegebenenfalls auch bewegt wird, und bringt sie mit der Lösung des zumindest teilweise gelösten Reaktionspartners in Kontakt. Auch hier können wie bei den nach der statischen Methode erhaltenen Produkten Nachbehandlungen im erwähnten Umfang vorgesehen werden.

Verwendet man als Austauscherbett eine Austauschersäule, so muß das geformte polymere Ausgangsprodukte eine Mindestkorngröße besitzen, die auch in Abhängigkeit von der Säulendimension festzulegen ist. Nach vollzogenem Austausch wird auch hier salzfrei gewaschen und es können dann entweder Nachbehandlungen oder weitere Austauschmaßnahmen durchgeführt werden.

Obwohl der Gegenstand der Erfindung darin besteht, geformte, kugelförmige Organopolysiloxan-Ammoniumverbindungen und entsprechende Herstellungsverfahren bereitzustellen, kann es in Ausnahmefällen notwendig sein, das geformte Produkt mit seinen definierten physikalischen Eigenschaften in einen ungeformten, feinteiligen Zustand zu überführen. Dies ist natürlich ohne weiteres nach gängigen Techniken des Zerkleinerns in feuchter oder trockener Form möglich, ohne daß die chemische Zusammensetzung der Organopolysiloxan-Ammoniumverbindungen verändert werden.

Auf der Fähigkeit der geformten polymeren Ammoniumverbindungen zum Anionenaustausch basiert die wichtigste Anwendung dieser geformten Produkte, nämlich der Einsatz als universell nutzbarer Anionenaustauscher, der neben den Vorteilen der sehr temperatur- und lösungsmittelstabilen Matrix, der stark fixierten und gegenüber Ablösen inerten Ammoniumgruppen, der Nichtquellbarkeit in wäßrigen oder organischen Medium noch weitere anwendungstechnische Vorteile aufweist.

Ein weiterer Anwendungsaspekt dieser geformten polymeren Ammoniumverbindungen ist der Austausch, d.h. die Bindung von Metallanionen, die in sehr hoher Verdünnung vorliegen können. Diese Bindung von Metallanionen, bevorzugt sind natürlich höherwertige, erfolgt analog zur Bindung üblicher anorganischer oder organischer Anionen. Diese Eigenschaft kann z. B. dazu genutzt werden, unerwünschte Metalle aus dem Abwasser zu entfernen oder wertvolle Metalle aus stark verdünnten Lösungen zu gewinnen.

Die Zersetzung der geformten polymeren Organosiloxan-Ammoniumverbindungen erfolgt an der Luft erst bei weit über 200° C und unter Schutzgasatmosphäre bei ca. 400°C.

### Beispiel 1

200 g eines tertiären Aminosilans der Formel N[(CH₂)₃Si(OC₂H₅)₃]₃ wurden mit 200 ml Ethanol in einem zylindrischen 2 l-Glasgefäß mit Doppelmantel, aufgesetztem KPG-Rührer mit Halbmond-Rührblatt, Rückflußkühler und Tropftrichter vereinigt. Nach dem Aufheizen auf Rückflußtemperatur wurde die Lösung mit 70 ml entsalztem Wasser versetzt und dann weiter 15 min. unter Rückfluß gerührt. Es wurde auf 55° C abgekühlt und diese Temperatur gehalten, bis die Gelierung einsetzte. 3 Minuten nach dem Gelierbeginn wurden dem sich bildenden Gel 400 ml 50° C warmes Xylol zugesetzt. Die Rührung wurde auf 600 U/min. eingestellt und nachdem wieder eine klare viskose Lösung gebildet worden war, wurden 400 ml 50° C warmes entsalztes Wasser zugegeben. In den 400 ml Wasser waren vorher 2 g Polyethylenglycol (Mowiol® 4 - 98) gelöst worden. Das 2-Phasensystem wurde auf Rückflußtemperatur aufgeheizt und weitere 2 Stunden bei 600 U/min. gerührt. Dann wurde der Kolbeninhalt abgekühlt und das vollständig in Form von Kugeln vorliegende Aminosiloxan N[(CH₂)₃SiO_{3/2}]₃ von der flüssigen Phase abfiltriert und in einen 2 l-Stahlautoklaven überführt. Nach Zugabe von 250 ml Xylol wurde der Autoklav verschlossen und aus einer Druckvorlage wurden dem Inhalt 100 ml Methylchlorid zugesetzt. Unter langsamem Rühren wurde der Autoklaveninhalt auf 130° C aufgeheizt und 3 Stunden bei dieser Temperatur gerührt. Anschließend wurde abgekühlt und das überschüssige Methylchlorid verdampft und zurückgewonnen. Die dem Autoklaven entnommene Produktsuspension wurde auf ein Filter überführt und der Feststoff abfiltriert. Der in Form von Kugeln vorliegende Feststoff wurde in Wasser eingeschlämmt und mit insgesamt 2 l Wasser gewaschen. Der Feststoff wurde an der Luft bei Raumtemperatur getrocknet und dann in Korngrößen klassifiziert. Insgesamt wurden 112 g Produkt der Zusammensetzung

[(H₃C)N(CH₂CH₂CH₂SiO_{3/2})₃]⁺Cl⁻

erhalten, wovon 98 % eine Korngröße von 0,3 - 2,0 mm besaßen. Einer Probetrocknung zufolge besaß das Produkt eine Schüttdichte von 750 g/l. Nach dem Einbringen in Wasser errechnete sich eine sog. volumenbezogene Trockensubstanz (gemäß DIN 54 408) von 590 g/l. Das Produkt besaß eine spezifische Oberfläche von 85 m²/g, ein Porenvolumen von 0,4 ml/g und einen Cl⁻-Gehalt von 10,25 % (Theorie: 10,22 %).

### Beispiel 2

100,4 g N[(CH₂)₃Si(OC₂H₅)₃]₃, 99,6 g Si(OC₂H₅)₄ und 200 ml Ethanol wurden in einem zylindrischen 2 l-Glasgefäß mit Doppelmantel, KPG-Rührer, Rückflußkühler und Tropftrichter vereinigt. Nach Zusatz von 70 ml Wasser wurde die Lösung auf Rückflußtemperatur aufgeheizt und 25 min. bei dieser Temperatur gerührt. Nach Abkühlung auf 70° C gelierte der Ansatz. Zwei Minuten nach Gelierbeginn wurden 375 ml 60° C warmes Toluol zugesetzt und die Rührung auf 700 U/min. eingestellt. Die Mischung wurde aufgeheizt und bei Erreichen von 70° C wurden 375 ml Wasser zugesetzt. Anschließend wurde 45 min. unter Rückfluß gerührt, dann abgekühlt und die Suspension auf ein Filter überführt. Die flüssige Phase wurde abgetrennt und das geformte produkt in einen 2 l-Stahlautoklaven überführt.

Nach Zugabe von 300 ml Toluol wurde der Autoklav verschlossen und aus einer Druckvorlage wurden dem Inhalt 80 ml Methylchlorid zugesetzt. Unter langsamem Rühren wurde der Autoklaveninhalt auf 120° C aufgeheizt und 5 Stunden bei dieser Temperatur gerührt. Anschließend wurde abgekühlt und überschüssiges Methylchlorid verdampft. Der in Form von Kugeln vorliegende Feststoff wurde von der flüssigen Phase abfiltriert und in einen Trockenschrank überführt. Hier wurde es zunächst 4 Stunden bei 80° C, 4 Stunden bei 100° C und 16 Stunden bei 130° C unter N₂-Atmosphäre getrocknet und anschließend 24 Stunden bei 180° C ebenfalls unter N₂-Atmosphäre getempert. Nach dem Abkühlen auf Raumtemperatur wurde der Feststoff in seine Korngrößen klassifiziert. 97 % der insgesamt erhaltenen 85,0 g Produkt besaßen eine Korngröße zwischen 0,1 - 0,8 mm.
- Cl⁻-Gehalt:: 6,8 % (Theorie: 6,7 %)
- Spez. Oberfläche:: 456 m²/g
- Porenvolumen:: 0,7 ml/g
- Schüttdichte:: 450 g/l

Anschließend wurde das geformte polymere Produkt, bestehend aus Einheiten der Formel

[(H₃C)N(CH₂CH₂CH₂SiO_{3/2})₃]⁺Cl⁻ · 3SiO₂

48 Stunden in einer Säule mit Wasserdampf-gesättigter Luft begast und dann in Wasser eingeschlämmt. Das Produkt besaß eine volumenbezogene Trockensubstanz (gemäß DIN 54 408) von 370 g/l.

### Beispiel 3

100 g des tertiären Aminosilans der Formel N[(CH₂)₃Si(OC₂H₅)₃]₃ wurden zunächst analog zu Beispiel 1 zu einem geformten, polymeren Organosiloxanamin, bestehend aus Polymereinheiten der Formel N[(CH₂)₃SiO_{3/2}]₃ umgesetzt. Das im wesentlichen Xylolfeuchte, kugelförmige Produkt wurde in einen 1 l-Autoklaven überführt und mit 200 ml Xylol sowie 60 g Propargylchlorid versetzt. Unter langsamem Rühren wurde die Suspension auf 130° C aufgeheizt und 5 Stunden bei dieser Temperatur gerührt. Dann wurde abgekühlt, der in Form von Kugeln vorliegende Feststoff von der flüssigen Phase abfiltriert und dann 2 Stunden bei 100° C und 22 Stunden bei 150° C getrocknet. Es konnten 56,6 g Produkt, bestehend aus Polymereinheiten der Formel

[(CH≡C-CH₂)N(CH₂CH₂CH₂SiO_{3/2})₃]⁺Cl⁻

erhalten werden. 95 % der Kugeln besaßen eine Korngröße von 0,3 -1,2 mm.
- Cl⁻-Gehalt:: 9,35 % (Theorie: 9,6 %)
- Spez. Oberfläche:: 169 m²/g
- Spez. Porenvolumen:: 0,5 ml/g
- Schüttdichte:: 670 g/l

Nach 48-stündiger Begasung mit feuchter Luft wurde das Produkt in Wasser eingeschlämmt.
- Volumenbezogene Trockensubstanz (DIN 54 408):: 580 g/l

### Beispiel 4

100 g des tertiären Aminosilans der Formel N[(CH₂)₃Si(OC₂H₅)₃]₃ wurden zunächst analog zu Beispiel 1 zu einem geformten, polymeren Organosiloxanamin, bestehend aus Polymereinheiten der Formel N[(CH₂)₃SiO_{3/2}]₃ umgesetzt. Das im wesentlichen Xylolfeuchte, kugelförmige Produkt wurde in einen 1 l-Autoklaven überführt und mit 130 ml Xylol sowie 70 g 2-Chlorethanol versetzt. Unter langsamen Rühren wurde die Suspension auf 130° C aufgeheizt und 3 Stunden bei dieser Temperatur gerührt. Dann wurde abgekühlt und das geformte Material von der flüssigen Phase abfiltriert und nach dem Waschen mit Ethanol in einen Trockenschrank überführt. Nach 4-stündiger Trocknung bei 80° C und 20-stündiger Trocknung bei 130° C unter leichtem Vakuum wurden 55,6 g Produkt mit einer Korngröße von 0,2 - 1,4 mm erhalten.
- Cl⁻-Gehalt:: 9,80 % Cl⁻ (Theorie: 9,40 %)
- Spez.Oberfläche:: 211 m²/g
- Spez. Porenvolumen:: 0,8 ml/g
- Schüttdichte:: 690 g/l

Nach 48-stündiger Begasung mit feuchter Luft wurde das Produkt in Wasser eingeschlämmt.
- Volumenbezogene Trockensubstanz (DIN 54 408):: 570 g/l

### Beispiel 5

200 g des tertiären Aminosilans der Formel N[(CH₂)₃Si(OC₂H₅)₃]₃ wurden zunächst analog zu Beispiel 1 zu einem geformten, polymeren Organosiloxanamin, bestehend aus Polymereinheiten der Formel N[(CH₂)₃SiO_{3/2}]₃ umgesetzt. Nach Überführung des Aminosilans in einen 2 l-Autoklaven wurde es mit 250 ml Xylol und 130 ml Isopropylchlorid versetzt. Nach 6-stündiger Reaktionszeit bei 130° C und weiterer Aufarbeitung analog zu Beispiel 4 wurden 105,3 g polymeres Produkt, bestehend aus Polymereinheiten der Formel

[(CH₃)₂CH-N(CH₂CH₂CH₂SiO_{3/2})₃]⁺Cl⁻

mit einer Korngröße von 0,3 - 1,4 mm erhalten.
- Cl⁻-Gehalt:: 8,8 % Cl⁻ (Theorie: 9,45 %)
- Spez. Oberfläche:: 461 m²/g
- Spez. Porenvolumen:: 0,9 ml/g
- Schüttdichte:: 481 g/l
- Volumenbezogene Trockensubstanz (DIN 54 408):: 412 g/l

### Beispiel 6

100 g eines sekundären Aminosilans der Formel HN[(CH₂)₃Si(OC₂H₅)₃]₂, 100 ml Ethanol und 150 ml Octanol wurden in einem zylindrischen 1 l-Glasgefäß mit Doppelmantel, aufgesetztem KPG-Rührer mit Halbmond-Rührblatt, Rückflußkühler und Tropftrichter vereinigt.

Die Lösung wurde auf Rückflußtemperatur aufgeheizt und in der Siedehitze mit 15 ml entsalztem Wasser versetzt. Es wurde 15 min. unter Rückfluß gerührt und dann die Mischung auf 35° C abgekühlt. Sofort beim Einsetzen der Gelierung wurden der Mischung 150 ml Octanol zugesetzt. Nach dem Einstellen der Rührgeschwindigkeit auf 500 U/min. und einer Homogenisierung der Mischung wurden 300 ml entsalztes Wasser zugegeben. Anschließend wurde auf Rückflußtemperatur aufgeheizt und 1 Stunde bei dieser Temperatur gerührt. Nach dem Abkühlen wurde der in Form von Kugeln vorliegende Feststoff, bestehend aus Polymereinheiten der Formel HN[(CH₂)₃SiO_{3/2}]₂, in einen 1 l-Autoklaven überführt, mit 200 g Octylchlorid versetzt und 10 Stunden bei 130° C gerührt. Anschließend wurde der Feststoff von der flüssigen Phase abfiltriert, mit Ethanol gewaschen, dann weitere 24 Stunden einer Temperaturbehandlung in 2 %iger wäßriger Salzsäurelösung (200 ml) bei 100° C unterzogen und dann 4 Stunden bei 80° C und 16 Stunden bei 130° C getrocknet. Es wurden 78,4 g polymeres Produkt, bestehend aus Polymereinheiten der Formel

[(C₈H₁₇)HN(CH₂CH₂CH₂Sio_{3/2})₂]⁺Cl⁻

mit einer Korngröße von 0,3 - 1,6 mm erhalten.
- Cl⁻-Gehalt:: 9,5 % (Theorie: 10,1 %)
- Spez. Oberfläche:: 540 m²/g
- Spez. Porenvolumen:: 1,8 ml/g
- Schüttdichte:: 380 g/l

Nach 48-stündiger Begasung mit feuchter Luft wurde das Produkt in Wasser eingeschlämmt.
- Volumenbezogene Trockensubstanz:: 180 g/l

### Beispiel 7

100 g HN[(CH₂)₁₀Si(OCH₃)₃]₂, 77 g Si(OC₂H₅)₄, 50 ml Ethanol, 25 ml H₂O und 75 ml Hexanol wurden in einem Rührbehälter vereinigt und auf Rückflußtemperatur aufgeheizt. Es wurde so lange refluxiert (ca.2 Stunden), bis die Gelierung einsetzte. 5 Minuten nach Gelierbeginn wurden zu dem Gel 150 ml 70° C warmes Wasser zugesetzt, in dem vorher 1 g Mowiol gelöst worden war. Anschließend wurde weitere 4 Stunden bei 600 U/min. Unter Rückfluß gerührt, dann abgekühlt, die gesamte Reaktionsmischung auf ein Filter überführt und der Feststoff von der flüssigen Phase abfiltriert und mit Ethanol gewaschen. Der in Form von Kugeln vorliegende Feststoff wurde in einen 1 l-Autoklaven überführt, mit 150 ml Ethanol und 50 ml Methylchlorid versetzt und 24 Stunden bei 120° C gerührt. Nach weiterer Behandlung analog zu Beispiel 6 wurden 103,2 g polymeres Produkt, bestehend aus Polymereinheiten der Formel

{(H₃C)HN[(CH₂)₁₀SiO_{3/2}]₂}⁺Cl⁻

mit einer Korngröße von 0,3 - 2,2 mm erhalten.
- Cl⁻-Gehalt:: 6,2 % (Theorie: 6,4 %)
- Spez. Oberfläche:: < 1 m²/g
- Spez. Porenvolumen:: nicht meßbar
- Schüttdichte:: 630 g/l

### Beispiel 8

161,9 g N[(CH₂)₃Si(OC₂H₅)₃]₃, 38,1 g (H₃C)₂Si(OC₂H₅)₂, 70 ml Wasser wurden in 200 ml Ethanol vereinigt. Analog zu Beispiel 2 wurden nach 15 min. Rückfluß, Gelieren bei 70° C, Zusatz von 320 ml Xylol, 45-minütigem Rühren bei 500 U/min. unter Rückfluß, Überführung in einen Stahlautoklaven und Quartärisierung mit Methyljodid (150 g) sowie Trocknung und Temperung 148,6 g einer polymeren Ammoniumverbindung, bestehend aus Polymereinheiten der Formel

[(H₃C)N(CH₂CH₂CH₂SiO_{3/2})₃]⁺J⁻ · (CH₃)₂SiO_{2/2}

erhalten. Korngröße: 98 % zwischen 0,3 und 1,6 mm.
- J⁻-Gehalt:: 20,6 % (Theorie: 21,6 %)
- Spez. Oberfläche:: < 1 m²/g
- Spez. Porenvolumen:: nicht meßbar
- Schüttdichte:: 650 g/l

Nach 48-stündiger Begasung mit feuchter Luft wurde das Produkt in Wasser eingeschlämmt.
- Volumenbezogene Trockensubstanz:: 490 g/l

### Beispiel 9

100 g 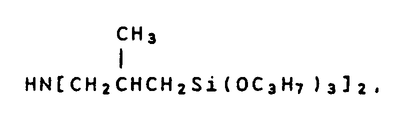
130 ml Isopropanol und 30 ml Wasser wurden in einem zylindrischen 1 l-Glasgefäß 15 min. unter Rückfluß gerührt, dann auf 70° C abgekühlt und langsam weiter gerührt, bis die Gelierung einsetzte.

Sofort nach dem Einsetzen der Gelierung wurden dem sich bildenden Gel 250 ml 2-Ethyl-hexanol, dann 142,6 g Zr(OC₄H₉)₄ und schließlich 250 ml Wasser zugesetzt. Nach Einstellung der Rührung auf 500 U/min. wurde 2 Stunden unter Rückfluß gerührt, dann abgekühlt, der in Form von Kugeln vorliegende Feststoff abfiltriert, 2 mal mit je 200 ml Isopropanol extrahiert und in einen Autoklaven überführt. Nach Zugabe von 400 ml Isopropanol und 50 ml Methylchlorid wurde 5 Stunden bei 130° C gerührt, dann abgekühlt und das in Form von Kugeln vorliegende Produkt direkt in Wasser eingeschlämmt und nochmals mit Wasser extrahiert. Es wurden 97,8 g Produkt, bestehend aus Polymereinheiten der Formel 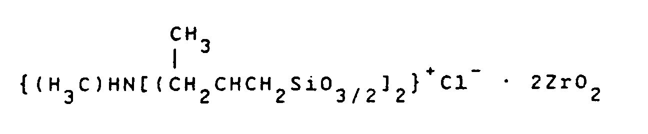
erhalten.
- Korngröße:: 0,2 - 1,8 mm (99 %)
- Cl⁻-Gehalt:: 6,5 % (Theorie: 6,7 %)
- Spez. Oberfläche:: 286 m²/g
- Spez. Porenvolumen:: 0,7 ml/g
- Schüttdichte:: 562 g/l
- Volumenbezogene Trockensubstanz:: 470 g/l

### Beispiel 10

200 g 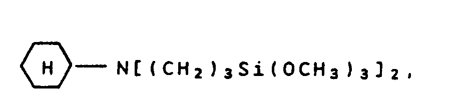
200 ml Ethanol und 70 ml Wasser wurden in einem zylindrischen 2 l-Glasgefäß zunächst 45 min. unter Rückfluß gerührt. Nach dem Abkühlen auf 75° C gelierte der Ansatz und 1 min. nach Gelierbeginn wurden zunächst 400ml Diisopropylether, dann 134,2 g Ti(OC₃H₇)₄ und schließlich 500 ml Wasser zugesetzt. Es wurde anschließend 2 Stunden bei 600 U/min. unter Rückfluß gerührt, dann abgekühlt und das in Form von Kugeln vorliegende Produkt von der flüssigen Phase abfiltriert und dann mit 400 ml Diisopropylether versetzt. Unter langsamem Rühren wurde durch diese Suspension bei Raumtemperatur über einen Zeitraum von 8 Stunden Chlorwasserstoffgas durchgeleitet, bis keine Aufnahme durch den Feststoff mehr beobachtet werden konnte. Anschließend wurde die Suspension noch 3 Stunden unter Rückfluß gerührt, dann abgekühlt und die flüssige Phase abgesaugt. Der in Form von Kugeln vorliegende Feststoff, bestehend aus der Formel 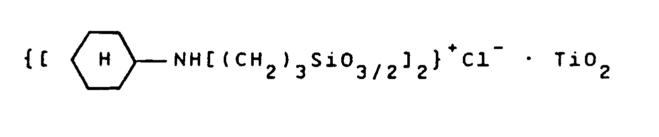
wurde mit Wasser gewaschen und dann direkt weiter verwendet.
- Korngröße:: 0,3 -2,4 mm
- Cl⁻-Gehalt:: 8,9 % (Theorie: 8,8 %)
- Spez. Oberfläche:: 513 m²/g
- Spez. Porenvolumen:: 1,2 ml/g
- Schüttdichte:: 470 g/l
- Volumenbezogene Trockensubstanz:: 360 g/l

### Beispiel 11

200 g N[(CH₂)₃Si(OCH₃)₃]₃, verdünnt mit 200 ml Methanol wurden in der Siedehitze mit 60 ml H₂O versetzt und sofort auf 50° C abgekühlt. 30 sec. nach dem Gelierbeginn wurden 500 ml 50° C warmes Decanol zugegeben. Nach vollzogener Homogenisierung der Mischung wurden zunächst 97,8 g Al(OC₄H₉)₃ und nach einer weiteren Minute 500 ml 50° C warmes Wasser zugesetzt. Die Rührung wurde auf 500 U/min. eingestellt und dann 2 Stunden unter Rückflußtemperatur gerührt. Danach wurde abgekühlt, der in Form von Kugeln vorliegende Feststoff von der flüssigen Phase abgetrennt, 2 mal mit n-Butanol gewaschen und schließlich mit 300 ml Butanol versetzt und in einen Autoklaven überführt, wo 100 ml Methylchlorid zugegeben wurden. Der geformte Feststoff wurde 4 Stunden bei 130° C gerührt und dann analog zu Beispiel 10 aufgearbeitet. Es wurden 156,3 g geformtes Produkt, bestehend aus Polymereinheiten der Formel

[(H₃C)N(CH₂CH₂CH₂SiO_{3/2})₃]⁺Cl⁻ · AlO_{3/2}

erhalten.
- Korngröße:: 98 % zwischen 0,1 - 2,2 mm
- Cl⁻-Gehalt:: 8,7 %
- Spez. Oberfläche:: 470 m²/g
- Spez. Porenvolumen:: 1,3 ml/g
- Schüttdichte:: 490 g/l
- Volumenbezogene Trockensubstanz:: 370 g/l

### Beispiel 12

200 g 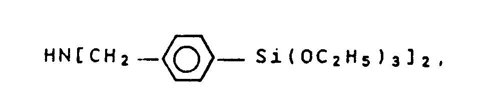
200 ml Ethanol und 70 ml Wasser wurden in einem zylindrischen 2 l-Glasgefäß zunächst 45 min. unter Rückfluß gerührt. Nach dem Abkühlen auf 70° C gelierte der Ansatz und sofort nach dem Einsetzen der Gelierung wurden 500ml Octanol, dann 79,0 g C₃H₇-Si(OC₂H₅)₃ und schließlich 500 ml Wasser zugesetzt. Es wurde anschließend 2 Stunden bei 600 U/min. unter Rückfluß gerührt, dann abgekühlt, der in Form von Kugeln vorliegende Feststoff abfiltriert, 3 mal mit je 400 ml Ethanol extrahiert und 6 Stunden bei 80° C, 6 Stunden bei 100° C und 12 Stunden bei 130° C unter Stickstoff getrocknet. Nach 48-stündiger Begasung mit feuchter Luft wurde das Produkt in Wasser eingeschlämmt und dann in eine Säule überführt. Die Säule wurde anschließend binnen 1 Stunde mit 1 l 5 %iger HCl-Lösung beschickt und dann mit 2 l Wasser nachgewaschen. Das Produkt, bestehend aus Polymereinheiten der Formel 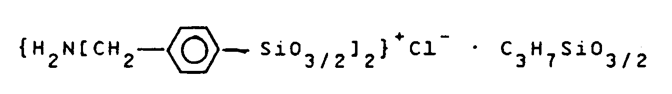
wurde dann 6 Stunden bei 80° C und 12 Stunden bei 100° C getrocknet. Erhalten werden konnten 159,3 g Produkt mit einer Korngröße von 0,3 -1,4 mm.
- Cl⁻-Gehalt:: 8,2 %
- Spez. Oberfläche:: 96 m²/g
- Spez. Porenvolumen:: 0,5 ml/g
- Schüttdichte:: 530 g/l
- Volumenbezogene Trockensubstanz:: 490 g/l

### Beispiel 13

Ausgehend von 161,9 g N[(CH₂)₃Si(OC₂H₅)]₃, 19,05 g (CH₃)₂Si(OC₂H₅)₂ und 26,8 g Si(OC₂H₅)₄ wurden analog zu Beispiel 2 108,7 g einer polymeren Ammoniumverbindung, bestehend aus Einheiten der Formel

{(H₃C)N[(CH₂)₃SiO_{3/2}]₃}⁺Cl⁻·0,5(CH₃)₂SiO_{2/2}·0,5SiO₂

erhalten.
- Korngrößenverteilung:: 0,3 - 1,4 mm
- Cl⁻-Gehalt:: 8,5 %
- Spez. Oberfläche:: 310 m²/g
- Spez. Porenvolumen:: 0,62 ml/g
- Schüttdichte:: 580 g/l
- Volumenbezogene Trockensubstanz:: 480 g/l

### Beispiel 14

200 g eines tertiären Aminosilans der Formel N[(CH₂)₃Si(OC₂H₅)₃]₃ wurden analog zu Beispiel 1 zum Aminosiloxan der Formel N[(CH₂)₃SiO_{3/2}]₃ umgesetzt. Nach 4-stündiger Trocknung bei 80° C, 4-stündiger Trocknung bei 100° C und 16-stündiger Trocknung bei 130° C unter N₂-Atmosphäre wurde das Produkt 48 Stunden lang in einer Säule mit Wasserdampf-gesättigter Luft begast und dann in Wasser eingeschlämmt. Die Säule wurde dann mit 1 l 3 %iger, wäßriger HCl-Lösung binnen 1 Stunde beschickt und dann mit 2 l Wasser gewaschen. Nach 4-stündiger Trocknung bei 80° C und 10-stündiger Trocknung bei 100°C wurden 105,6 g Produkt der Formel

{HN[(CH₂)₃SiO_{3/2}]₃}⁺Cl⁻

erhalten.
- Korngröße:: 0,3 - 2,0 mm
- Cl⁻-Gehalt:: 10,6 %
- Spez. Oberfläche:: 152 m²/g
- Spez. Porenvolumen:: 0,6 ml/g
- Schüttdichte:: 620 g/l
- Volumenbezogene Trockensubstanz:: 500 g/l

### Beispiel 15

50 ml der nach Beispiel 1 hergestellten geformten Organosiloxan-Ammoniumverbindung wurden in eine Säule überführt und mit 250 ml 2 %iger Ammoniaklösung binnen 30 min. beschickt. Anschließend wurden mit 250 ml Wasser nachgewaschen und Waschlösung sowie Durchlauf miteinander vereinigt. Die darin bestimmte Menge Cl⁻ betrug 3,0 g (99,6 % d. Theorie). Der nun in der OH⁻-Form vorliegende Ionenaustauscher wurde wieder durch Umsetzung mit 100 ml 1n-HCl-Lösung quantitativ in die Cl⁻-Form überführt, wie durch Rücktitration der überschüssigen Säure ermittelt werden konnte.

### Beispiel 16

50 ml der nach Beispiel 1 hergestellten geformten Organosiloxan-Ammoniumverbindung wurden mit 300 ml 8 %iger NaHCO₃-Lösung analog zu Beispiel 14 vollständig in ein Produkt, bestehend aus Polymereinheiten der Formel

[(H₃C)N(CH₂CH₂CH₂SiO_{3/2})₃]⁺HCO₃⁻

überführt. Nach 6-stündiger Trocknung bei 80° C und 10-stündiger Trocknung bei 100° C wurden 31,6 g erhalten

### Beispiel 17

50 ml der nach Beispiel 1 hergestellten geformten Organosiloxan-Ammoniumverbindung wurden in eine Säule überführt. Die Säule wurde anschließend binnen 1 Stunde mit 1 l Lösung beschickt, welche eine Chromat-Konzentration von 10 ppm aufwies. Dann wurde mit 200 ml Wasser nachgewaschen und vom gesamten Durchlauf eine Chromatanalyse durchgeführt. Die Chromatkonzentration betrug demzufolge weniger als 0,1 ppm.

## Patentansprüche

1. Kugelförmige polymeren, gegebenenfalls vernetzte Organosiloxanammoniumverbindungen mit kieselsaureartigem Grundgerüst, bestehend aus Einheiten der allgemeinen Formel 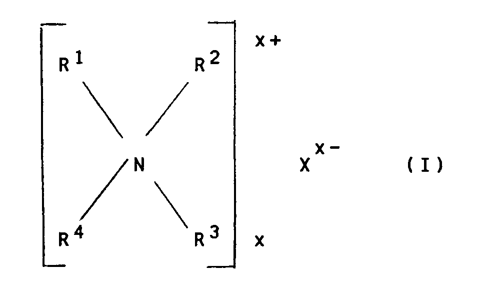 in welcher R¹ und R² gleich oder verschieden sind und eine Gruppe der allgemeinen Formel 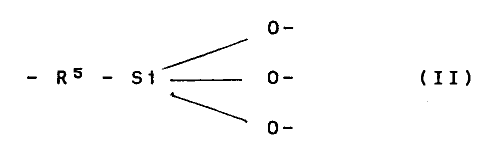 bedeuten, wobei die Stickstoffatome in (I) über die Reste R⁵ mit den Siliciumatomen in (II) verbunden sind und R⁵ eine Alkylengruppe mit 1 bis 10 C-Atomen, eine Cycloalkylengruppe mit 5 bis 8 C-Atomen oder eine Einheit der allgemeinen Formel 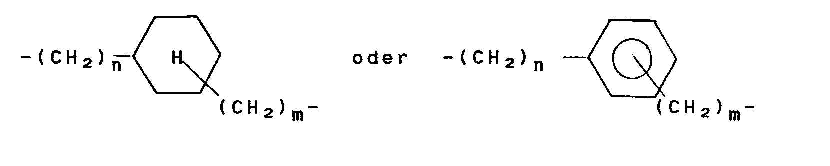 darstellt, in der
n eine Zahl von 1 bis 6 ist und die Zahl der stickstoffständigen Methylengruppen angibt und
m eine Zahl von 0 bis 6 ist,
und wobei die freien Valenzen der an das Siliciumatom gebundenen Sauerstoffatome wie bei Kieselsäuregerüsten durch Siliciumatome weiterer Gruppen der Formel (II) und/oder mit den Metallatomen einer oder mehrerer der vernetzenden Brückenglieder 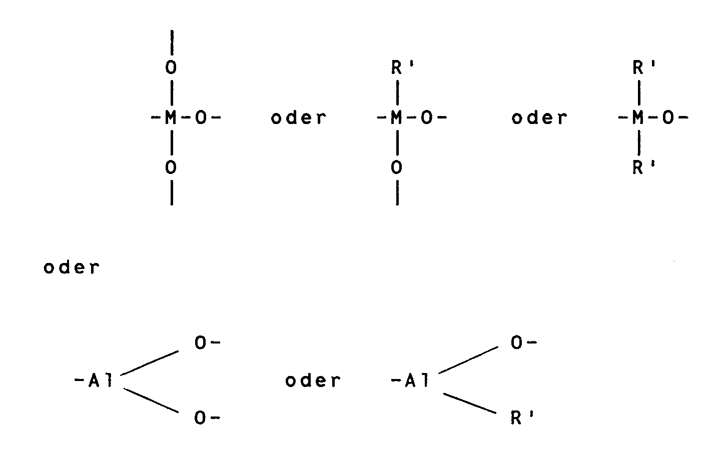 abgesättigt sind, wobei M ein Silicium-, Titan- oder Zirkoniumatom und R'eine lineare oder verzweigte Alkylgruppe mit 1 bis 5 C-Atomen ist und das Verhältnis der Siliciumatome aus den Gruppen der allgemeinen Formel (2) zu den Metallatomen in den Brückengliedern 1 : 0 bis 1 : 10 beträgt, und in welcher R³ gleich R¹ oder R² oder Wasserstoff, eine lineare oder verzweigte Alkylgruppe aus 1 bis 20 C-Atomen, eine aus 5 bis 8 C-Atomen bestehende Cycloalkylgruppe oder die Benzylgruppe ist und
R⁴ gleich Wasserstoff, eine lineare oder verzweigte Alkylgruppe mit 1 bis 20 C-Atomen oder eine aus 5 bis 8 C-Atomen bestehende Cycloalkyl-, Benzyl-, Allyl-, Propargyl-, Chlorethyl-, Hydroxyethyl-, Chlorpropylgruppe und
X ein Anion mit der Wertigkeit von x gleich 1 bis 3 aus der Gruppe Halogenid, Hypochlorit, Sulfat, Hydrogensulfat, Nitrit, Nitrat, Phosphat, Dihydrogenphosphat, Hydrogenphosphat, Carbonat, Hydrogencarbonat, Hydroxid, Chlorat, Perchlorat, Chromat, Dichromat, Cyanid, Cyanat, Rhodanid, Sulfid, Hydrogensulfid, Selenid, Tellurid, Borat, Metaborat, Azid, Tetrafluoroborat, Tetraphenylborat, Hexafluorophosphat, Formiat, Acetat, Propionat, Oxalat, Trifluoroacetat, Trichloracetat oder Benzoat ist, mit einem Durchmesser von 0,01 bis 3,0 mm einer spezifischen Oberfläche bis 1000 m²/g, einem spezifischen Porenvolumen bis 5,0 ml/g, einer Schüttdichte von 50 bis 1000 g/l sowie einer volumenbezogenen Trockensubstanz von 50 bis 750 g/l.

2. Geformte polymere Organosiloxan-Ammoniumverbindungen nach Anspruch 1,
**dadurch gekennzeichnet,**
daß R⁵ eine lineare oder verzweigte Alkylengruppe ist.

3. Geformte polymere Organosiloxan-Ammoniumverbindungen nach Anspruch 1 oder 2,
**dadurch gekennzeichnet,**
daß R¹, R² und R³ identisch sind, R⁴ der Methylrest und X gleich Chlorid, Bromid oder Jodid ist.

4. Geformte polymere Organosiloxan-Ammoniumverbindungen nach einem oder mehreren der Ansprüche 1 bis 3,
bestehend aus Einheiten der Formel
[(H₃C)N(CH₂CH₂CH₂SiO_{3/2})₃]⁺Cl⁻

5. Verfahren zur Herstellung der geformten polymeren Organosiloxan-Ammoniumverbindungen nach einem oder mehreren der Ansprüche 1 bis 4,
**dadurch gekennzeichnet,**
daß man ein sekundäres oder ein tertiäres Aminosilan der allgemeinen Formel 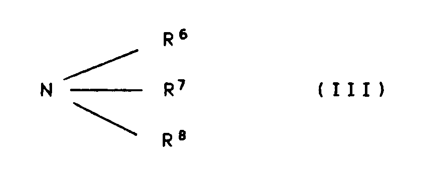 in welcher R⁶ und R⁷ gleich oder verschieden sind und eine Gruppe der allgemeinen Formel
- R⁵ - Si(OR⁹)₃ (IV)
bedeuten,
R⁵ dieselbe Bedeutung wie in Formel (II) hat,
R⁹ eine lineare oder verzweigte Alkylgruppe mit 1 bis 5 C-Atomen und
R⁸ gleich R⁶ und R⁷ oder Wasserstoff, eine lineare oder verzweigte Alkylgruppe mit 1 bis 10 C-Atomen, eine aus 5 bis 8 C-Atomen bestehende Cycloalkylgruppe oder die Benzylgruppe ist,
gegebenenfalls anch Zusatz einer oder mehrerer Vernetzer der allgemeinen Formel
M(OR)₂₋₄R'₀₋₂
bzw.
Al(OR)₂₋₃R'₀₋₁
wobei M ein Silicium-, Titan- oder Zirkonatom,
R' eine lineare oder verzweigte Alkylgruppe mit 1 bis 5 C-Atomen ist, und das Verhältnis der Siliciumatome aus den Gruppen der allgemeinen Formel (IV) zu den Metallatomen in den Vernetzern 1 : 0 bis 1 : 10 beträgt, in einem weitgehend wassermischbaren, aber Aminoorganosilan und Vernetzer lösenden üblichen Lösungsmittel auflöst, der Lösung unter Rühren eine zumindest für die vollständige Hydrolyse und Kondensation ausreichende Menge Wasser zufügt, das Reaktionsgemisch unter Weiterrühren bei einer bestimmten Temperatur im Bereich von Raumtemperatur bis 200° C unter der Maßgabe gelieren läßt, daß es bei Gelierungsbeginn oder bis zu einer Stunde danach mit 10 bis 2000 Gew.%, vorzugsweise 50 bis 500 Gew.%, bezogen auf die Gesamtmenge von Aminoorganosilan (III) und gegebenenfalls Vernetzer, eines weitgehend wasserunlöslichen, aber die (an)gelierte Reaktionsmischung lösenden üblichen Lösungsmittels versetzt
und homogenisiert wird, dem viskosen Homogenisat sofort oder im Zeitraum bis zu einer Stunde, gegebenenfalls unter Erhöhung der ursprünglich eingestellten Temperatur, 10 bis 2000 Gew.%, vorzugsweise 50 bis 1000 Gew.%, bezogen auf die Gesamtmenge Aminoorganosilan und gegebenenfalls Vernetzer, Wasser zugibt, die jetzt Siloxan enthaltende organische Phase in dem flüssigen Zweiphasensystem dispergiert und den sich in Form von Kugeln bildenden Feststoff nach dafür ausreichender Reaktionszeit bei Raumtemperatur bis 200° C von der flüssigen Phase abtrennt und dann gegebenenfalls extrahiert, bei Raumtemperatur bis 250° C, gegebenenfalls unter Schutzgas oder im Vakuum trocknet und 1 bis 100 Stunden bei Temperaturen von 150 bis 300° C tempert und/oder klassifiziert, das so erhältliche polymere, geformte Organosiloxanamin der allgemeinen Formel 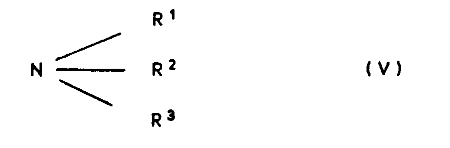 wobei R¹, R² und R³ dieselbe Bedeutung haben wie in Formel (I), mit einer stöchiometrischen, bevorzugt überschüssigen Menge
a) eines aus 1 bis 20 C-Atomen bestehenden linearen oder verzweigten Alkylhalogenids, eines aus 5 bis 8 C-Atomen bestehenden Cycloalkylhalogenids oder Benzylhalogenids, in dem der Halogenrest ein Chlor-, Brom- oder Jodatom ist, oder
b) einer anorganischen oder organischen Protonensäure,
gegebenenfalls in Anwesenheit eines Lösungsmittels bzw. Lösungsvermittlers aus der Gruppe der cyclischen oder offenkettigen Ether, der Chlorkohlenwasserstoffverbindungen, der aliphatischen oder aromatischen Nitroverbindungen, der aliphatischen oder aromatischen Nitrile, der offenkettigen oder cyclischen aliphatischen Kohlenwasserstoffe, der unsubstituierten oder mit Alkylgruppen substituierten Aromaten, der linearen oder verzweigten Alkohole mit 1 bis 12 C-Atomen, der symmetrischen oder unsymmetrischen Ketone mit 3 bis 8 C-Atomen oder von Dimethylformamid, Dimethylsulfoxid oder von Wasser, bei Temperaturen von Raumtemperatur bis 250° C und einem Druck, welcher der Summe der Partialdrucke der Komponenten der Reaktionsmischung bei der jeweiligen Temperatur entspricht, über einen Zeitraum von wenigen Minuten bis zu mehreren Tagen umsetzt, das gebildete polymere geformte Organosiloxan-Ammoniumprodukt gegebenenfalls zunächst von gasförmigen Komponenten befreit, dann nach gängigen Aufarbeitungsmaßnahmen von der flüssigen Phase abtrennt, mit einem der genannten Lösungsmittel oder mit Wasser wäscht oder extrahiert, gegebenenfalls in dem Lösungsmittel bei erhöhter Temperatur behandelt, das von Lösungsmittel getrennte Produkt bei Normaldruck, unter Vakuum oder unter Schutzgas teilweise oder vollständig bei einer Temperatur von Raumtemperatur bis 250° C während 1 bis 60 Stunden trocknet, bei 100 bis 300° C über einen Zeitraum von bis zu 100 Stunden tempert und klassifiziert, wobei jedoch die Reihenfolge dieser gängigen Aufarbeitungsmaßnahmen variieren kann.

6. Verfahren nach Anspruch 5,
**dadurch gekennzeichnet,**
daß das geformte polymere Amin der Formel (V) mit einem aus 1 bis 20 C-Atomen bestehenden linearen oder verzweigten Alkylhalogenid, einem aus 5 bis 8 C-Atomen bestehenden Cycloalkylhalogenid oder mit Benzylhalogenid, in dem der Halogenrest gleich Chlor-, Brom- oder Jodatom ist, ungetrocknet lösungsmittelfeucht, unmittelbar nach seiner Bildung quartärisiert wird.

7. Verfahren nach Anspruch 5 oder 6,
**dadurch gekennzeichnet,**
daß als Lösungsmittel bei der Quartärisierung lineare oder verzweigte Alkohole mit 1 bis 10 C-Atomen, Toluol, o-, m-, p-Xylol oder Gemische daraus, oder Wasser verwendet werden.

8. Verfahren nach einem oder mehreren oder Ansprüche 5 bis 7,
**dadurch gekennzeichnet,**
daß das noch feuchte Quartärisierungsprodukt in einem der zur Quartärisierung geeigneten Lösungsmittel, das gegebenenfalls mit Halogenwasserstoffsäure angesäuert wird, einer Temperaturbehandlung während eines Zeitraums bis zu 100 Stunden bei Temperaturen bis zu 200° C unterworfen wird.

9. Verfahren nach einem oder mehreren der Ansprüche 5 bis 8,
**dadurch gekennzeichnet,**
daß man das gegebenenfalls lösungsmittelfeucht digerierte Quartärisierungsprodukt nach Extraktion mit Wasser oder einem anderen Lösungsmittel als dem zuvor verwendeten, ungetrocknet läßt.

10. Verfahren zur Herstellung solcher polymerer geformter Organosiloxan-Ammoniumverbindungen nach Anspruch 1 oder 2, bei denen das quartäre Stickstoffatom vollständig mit Organylgruppen substituiert ist und X für ein Anion gemäß Formel (I), jedoch nicht für Halogenid steht,
**dadurch gekennzeichnet,**
daß man eine polymere geformte Organosiloxan-Ammoniumverbindung, bei der das quartäre Stickstoffatom vollständig mit Organylgruppen substituiert ist und X für Halogenid steht, mit einem anorganischen oder organischen Reagenz, welches in ein Kation und Anion dissoziieren kann, zum gegenseitigen Austausch der Anionen nach dem statischen oder dynamischen Ionenaustauschprinzip umsetzt, und jeweils gegebenenfalls, von der flüssigen Phase abtrennt, wäscht, trocknet, tempert und/oder klassifiziert.

11. Verwendung der polymeren geformten Ammoniumverbindungen nach den Ansprüchen 1 bis 4 als Ionenaustauscher.

12. Verwendung der polymeren geformten Ammoniumverbindungen nach den Ansprüchen 1 bis 4 zur Entfernung von Metallanionen aus Lösungen.

## Claims

1. Spherical polymeric, optionally cross-linked organosiloxane ammonium compounds having a silica type basic structure, consisting of units corresponding to the general formula 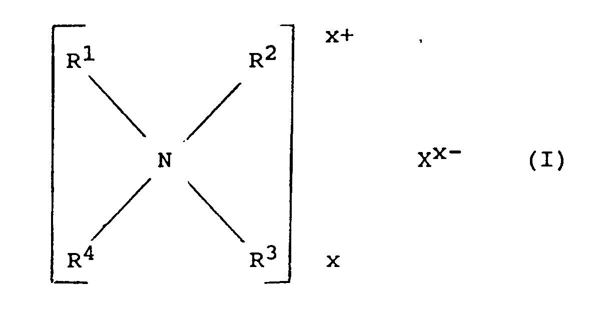 wherein R¹ and R² are identical or different and denote a group corresponding to the general formula 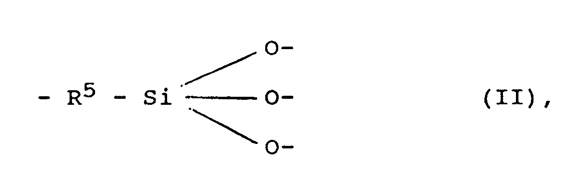 in which the nitrogen atoms in formula (I) are attached to the silicon atoms in formula (II) by the groups R⁵, and R⁵ denotes an alkylene group having 1 to 10 carbon atoms, a cycloalkylene group having 5 to 8 carbon atoms or a unit corresponding to the general formula 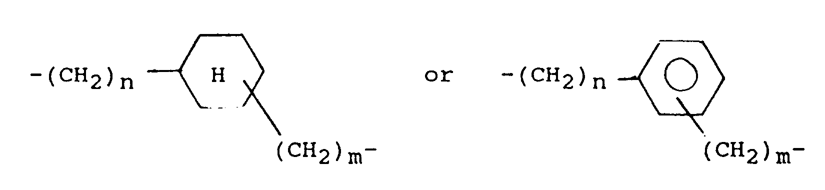 wherein
n stands for a number from 1 to 6 and indicates the number of methylene groups attached to nitrogen and
m stands for a number from 0 to 6,
and the free valencies of the oxygen atoms attached to the silicon atom are saturated, as in silica structures, by silicon atoms of other groups of formula (II) and/or by the metal atoms of one or more of the following cross-linking bridging members: 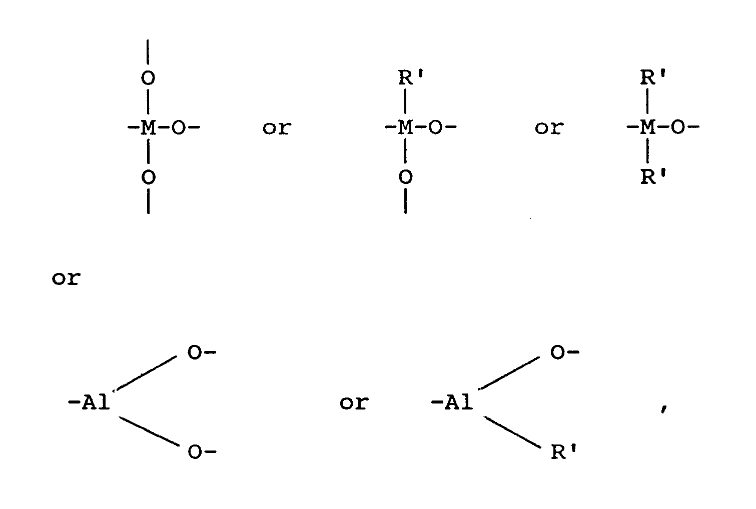 wherein M stands for a silicon, titanium or zirconium atom and R' denotes a straight chain or branched alkyl group having 1 to 5 carbon atoms and the ratio of silicon atoms from the groups of the general formula (II) to the metal atoms in the bridging members is from 1 : 0 to 1 : 10, and R³ is the same as R¹ or R² or denotes hydrogen, a straight chain or branched alkyl group having 1 to 20 carbon atoms, a cycloalkyl group having 5 to 8 carbon atoms or the benzyl group, and
R⁴ denotes hydrogen or a straight chain or branched alkyl group having 1 to 20 carbon atoms or a cycloalkyl group having 5 to 8 carbon atoms or a benzyl, allyl, propargyl, chloroethyl, hydroxyethyl or chloropropyl group, and
X is an anion whose valency x is from 1 to 3, selected from halide, hypochlorite, sulphate, hydrogen sulphate, nitrite, nitrate, phosphate, dihydrogen phosphate, hydrogen phosphate, carbonate, hydrogen carbonate, hydroxide, chlorate, perchlorate, chromate, dichromate, cyanide, cyanate, thiocyanate, sulphide, hydrogen sulphide, selenide, telluride, borate, metaborate, azide, tetrafluoroborate, tetraphenylborate, hexafluorophosphate, formate, acetate, propionate, oxalate, trifluoroacetate, trichloroacetate or benzoate, having a diameter of from 0.01 to 3.0 mm, a specific surface area of up to 1000 m²/g, a specific pore volume of up to 5.0 ml/g, a bulk density of from 50 to 1000 g/l and a dry substance content, based on the volume, of from 50 to 750 g/l.

2. Shaped polymeric organosiloxane ammonium compounds according to Claim 1, characterised in that R⁵ is a straight chain or branched alkylene group.

3. Shaped polymeric organosiloxane ammonium compounds according to Claim 1 or Claim 2, characterised in that R¹, R² and R³ are identical, R⁴ stands for the methyl group and X stands for a chloride, bromide or iodide.

4. Shaped polymeric organosiloxane ammonium compounds according to one or more of Claims 1 to 3, consisting of units of the formula
[(H₃C)N(CH₂CH₂CH₂SiO_{3/2})₃]⁺Cl⁻ .

5. A process for the preparation of the shaped polymeric organosiloxane ammonium compounds according to one or more of Claims 1 to 4, characterised in that a secondary or tertiary aminosilane corresponding to the general formula 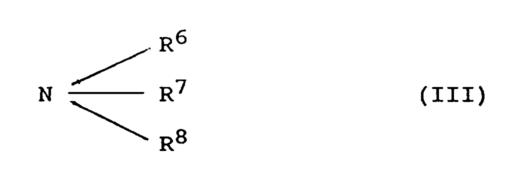 wherein R⁶ and R⁷ are identical or different and denote a group corresponding to the general formula
- R⁵ - Si(OR⁹ )₃ (IV),
R⁵ has the same meaning as in formula (II),
R⁹ stands for a straight chain or branched alkyl group having 1 to 5 carbon atoms and
R⁸ is identical to R⁶ and R⁷ or stands for hydrogen, a straight chain or branched alkyl group having 1 to 10 carbon atoms or a cycloalkyl group having 5 to 8 carbon atoms or the benzyl group,
is dissolved in a conventional solvent which is substantially water-miscible but dissolves aminoorganosilane and cross-linking agents, optionally after the addition of one or more cross-linking agents of the general formula
M(OR)₂₋₄R'₀₋₂
or
Al(OR)₂₋₃R'₀₋₁
wherein M stands for a silicon, titanium or zirconium atom,
R' stands for a straight chain or branched alkyl group having 1 to 5 carbon atoms and the ratio of silicon atoms from the groups of the general formula (IV) to the metal atoms in the cross-linking agents is from 1:0 to 1:10, a quantity of water at least sufficient for complete hydrolysis and condensation is added to the solution with stirring, the reaction mixture is left to gel with continued stirring at a particular temperature in the range of from room temperature to 200°C with the proviso that at the onset of gelling or up to one hour thereafter from 10 to 2000% by weight, preferably from 50 to 500% by weight, based on the total quantity of aminoorganosilane (III) and optionally cross-linking agents, of a conventional solvent which is substantially water insoluble but dissolves the (partly) gelled reaction mixture are added and the reaction mixture is homogenized, water in a quantity of from 10 to 2000% by weight, preferably from 50 to 1000% by weight, based on the total quantity of aminoorganosilane and optionally cross-linking agent, is added to the viscous homogenate either immediately or within a period of up to one hour, optionally with raising of the initially adjusted temperature, the organic phase, which now contains siloxane, is dispersed in the liquid diphasic system and the solid substance which is produced in the form of spheres is separated from the liquid phase after a sufficient reaction time for this purpose at a temperature from room temperature to 200°C and is then optionally extracted, dried at a temperature from room temperature to 250°C, optionally under a protective gas or in a vacuum, and tempered for 1 to 100 hours at temperatures from 150 to 300°C and/or classified, and the resulting polymeric, shaped organosiloxanamine corresponding to the general formula 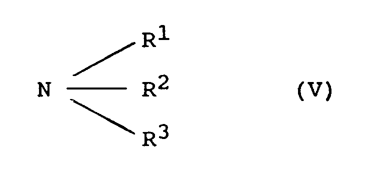 wherein R¹, R² and R³ have the same meaning as in formula (I)
is reacted with a stoichiometric, preferably excess quantity of
a) a straight chain or branched alkyl halide having 1 to 20 carbon atoms, a cycloalkyl halide having 5 to 8 carbon atoms or benzyl halide in which the halogen is a chlorine, bromine or iodine atom or
b) an inorganic or organic protonic acid,
optionally in the presence of a solvent or a solubilizing agent selected from cyclic or open chain ethers, chlorinated hydrocarbon compounds, aliphatic or aromatic nitro compounds, aliphatic or aromatic nitriles, open chain or cyclic aliphatic hydrocarbons, aromatic compounds which may be unsubstituted or substituted with alkyl groups, straight chain or branched alcohols having 1 to 12 carbon atoms, symmetric or asymmetric ketones having 3 to 8 carbon atoms or dimethylformamide, dimethylsulphoxide or water at temperatures from room temperature to 250°C and at a pressure equal to the sum of the partial pressures of the components of the reaction mixture at the given temperature over a period ranging from a few minutes to several days, the shaped polymeric organosiloxane ammonium product thus obtained is optionally first freed from gaseous components and is then separated from the liquid phase by conventional methods of working up, washed or extracted with one of the above mentioned solvents or with water and optionally treated in the solvent at an elevated temperature, and the product separated from solvent is partly or completely dried at a temperature from room temperature to 250°C for 1 to 60 hours at normal pressure, under a vacuum or under a protective gas and is tempered at from 100 to 300°C over a period of up to 100 hours and classified, but the sequence of these conventional working up measures may be varied.

6. A process according to Claim 5, characterised in that the shaped polymeric amine of formula (V) is quaternised immediately after its formation, in the undried state still moist with solvent, with a straight chain or branched alkyl halide having 1 to 20 carbon atoms, a cycloalkyl halide having 5 to 8 carbon atoms or benzyl halide in which the halogen may be a chlorine, bromine or iodine atom.

7. A process according to Claim 5 or 6, characterised in that the solvents used for quaternisation are straight chain or branched alcohols having 1 to 10 carbon atoms, toluene, o-, m- or p-xylene or mixtures thereof or water.

8. A process according to one or more of Claims 5 to 7, characterised in that the quaternisation product is subjected while still moist to a temperature treatment at temperatures of up to 200°C for a period of up to 100 hours in a solvent suitable for quaternisation which is optionally acidified with a hydrohalic acid.

9. A process according to one or more of Claims 5 to 8, characterised in that the digested quaternisation product, optionally still moist with solvent, is left in the undried state after extraction with water or some solvent other than that previously used.

10. A process for the preparation of such polymeric shaped organosiloxane ammonium compounds according to Claim 1 or 2 in which the quaternary nitrogen atom is completely substituted with organyl groups and X stands for an anion according to formula (I) but not for halide, characterised in that a polymeric shaped organosiloxane ammonium compound in which the quaternary nitrogen atom is completely substituted with organyl groups and X stands for halide, is reacted with an inorganic or organic reagent which is capable of dissociating into a cation and an anion for mutual exchange of the anions on the principle of static or dynamic ion exchange, and the product is optionally separated from the liquid phase, washed, dried, tempered and/or classified.

11. Use of the polymeric shaped ammonium compounds according to Claims 1 to 4 as ion exchangers.

12. Use of the polymeric shaped ammonium compounds according to Claims 1 to 4 for the removal of metal anions from solutions.

## Revendications

1. Composés d'organosiloxane contenant des groupes d'ammonium, ayant un squelette de base du type acide silicique, polymères, éventuellement réticulés, ayant une forme précise, qui consistent en des motifs de formule générale 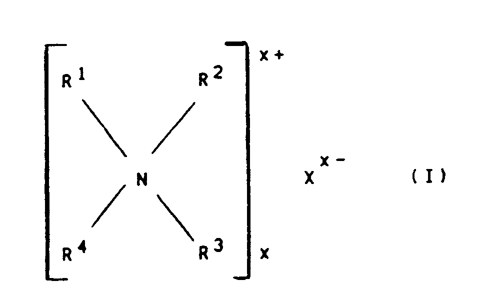 dans laquelle R¹ et R² sont semblables ou différents et représentent un groupe de formule générale : 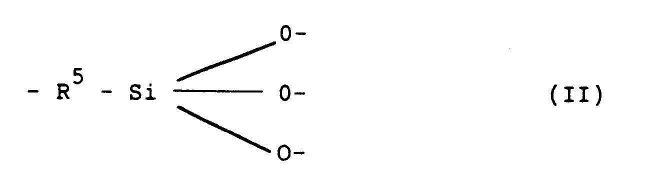 dans laquelle les atomes d'azote dans (I) sont liés aux atomes de silicium dans (II) par l'intermédiaire du reste R⁵ et R⁵ représente un radical alcoylène ayant de 1 à 10 atomes de carbone, un radical cycloalcoylène ayant de 5 à 8 atomes de carbone ou un motif de formule générale : 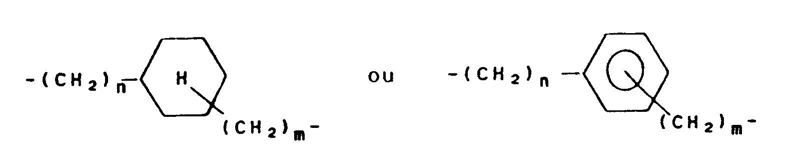 dans laquelle n est un nombre de 1 à 6 et indique le nombre des radicaux méthylène qui sont fixés à l'azote, m est un nombre de 0 à 6
et dans laquelle les valences libres des atomes d'oxygène liés à l'atome de silicium comme pour les squelettes d'acide silicique, sont saturées par des atomes de silicium, des radicaux supplémentaires de formule (II) et/ou avec des atomes métalliques d'un ou plusieurs des éléments de pontage qui réticulent : 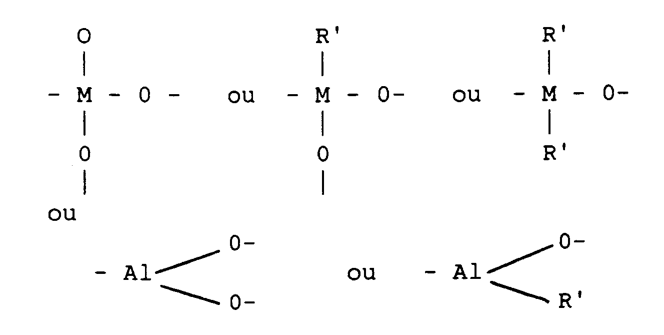 dans laquelle M est un atome de silicium, de titane ou de zirconium et R' est un radical alcoyle linéaire ou ramifié ayant de 1 à 5 atomes de carbone, et le rapport des atomes de silicium choisi dans les groupes de formule générale (II) et les atomes métalliques dans les éléments de pontage, s'élève de 1:0 à 1:10, et dans laquelle R³ est identique à R¹ et R², ou est de l'hydrogène, un radical alcoyle linéaire ou ramifié composé de 1 à 20 atomes de carbone, un radical cycloalcoyle composé de 5 à 8 atomes de carbone ou le radical benzyle, et R⁴ est égal à de l'hydrogène, un radical alcoyle linéaire ou ramifié ayant de 1 à 20 atomes de carbone, ou un radical cyclo-alcoyle composé de 5 à 8 atomes de carbone, benzyle, allyle, propargyle, chloroéthyle, hydroxyéthyle et chloropropyle, et
X est un anion ayant la valence de x égale à 1 à 3, choisi dans le groupe constitué par un halogènure, un hypochlorite, un sulfate, un hydro-génosulfate, un nitrite, un nitrate, un phosphate, un dihydrogénophosphate, un hydrogénophosphate, un carbonate, un hydrogénocarbonate, un hydroxyde, un chlorate, un perchlorate, un chromate, un bichromate, un cyanure, un cyanate, un sulfocyanate, un sulfure, un hydrogénosulfure, un séléniure, un tellurure, un borate, un métaborate, un azidure, un tétrafluoroborate, un tétraphenylborate, un hexafluorophosphate, un formiate, un acétate, un propionate, un oxalate, un trifluoroacétate, un trichloroacétate ou un benzoate,
caractérisés par un diamètre de 0,01 à 3,0 mm, une surface spécifique de 0 à 1000 m²/g, un volume de pores spécifique de 0 à 5,0 ml/g, une densité apparente de 50 à 1000 g/l ainsi qu'une teneur en substance sèche rapportée au volume de 50 à 750 g/l.

2. Composés d'organosiloxane contenant des groupes ammonium polymères, ayant une forme définie selon la revendication 1, caractérisés en ce que R⁵ est un groupe alcoylène linéaire ou ramifié.

3. Composés d'organosiloxane contenant des groupes ammonium polymères, ayant une forme définie selon la revendication 1 ou la revendication 2, caractérisés en ce que R¹, R² et R³ sont identiques, R⁴ est le reste méthyle et X est égal à chlorure, bromure ou iodure.

4. Composés d'organosiloxane contenant des groupes ammonium polymères, ayant une forme définie selon l'une ou plusieurs des revendications 1 à 3, qui se compose de motifs
[ (H₃C)-N-(CH₂CH₂CH₂SiO_{3/2})₃]⁺ Cl⁻

5. Procédé d'obtention des composés d'organosiloxane contenant des groupes ammonium polymères ayant une forme définie selon une ou plusieurs des revendications 1 à 4, caractérisé en ce qu on dissout un aminosilane secondaire ou un aminosilane tertiaire de formule générale : 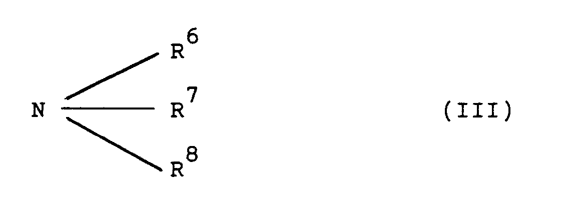 dans laquelle R⁶ et R⁷ sont identiques ou différents et représentent un radical de formule générale :
- R⁵ - Si(OR⁹)₃ (IV)
dans laquelle R⁵ a la même signification que dans la formule (II) et R⁹ est un radical alcoyle linéaire ou ramifié ayant de 1 à 5 atomes de carbone et R⁸ est identique à R⁶ et R⁷ ou est de l'hydrogène, un radical alcoyle linéaire ou ramifié, ayant de 1 à 10 atomes de carbone, un radical cycloalcoyle formé de 5 à 8 atomes de carbone, ou le radical benzyle
le cas échéant avec addition d'un ou plusieurs agents de réticulation de formule générale :
M(OR)₂₋₄ R'₀₋₂
ou
Al(OR)₂₋₃ R'₀₋₁
dans laquelle M est un atome de silicium, de titane ou de zirconium, R' est un radical alcoyle linéaire ou ramifié ayant de 1 à 5 atomes de carbone et le rapport des atomes de silicium des groupes de formule générale (IV), aux atomes de métal dans l'agent de réticulation, s'élève de 1:0 à 1:10, dans un solvant usuel largement miscible à l'eau, mais qui dissout aussi l'amino-organosilane et l'agent de réticulation,
on ajoute à la solution sous agitation une quantité d'eau au moins suffisante pour une hydrolyse complète et une condensation,
on fait gélifier le mélange réactionnel sous agitation supplémentaire, à une température déterminée dans la zone allant de la température ambiante à 200°C avec la réserve qu'on ajoute au démarrage de la gélification ou jusqu'à une heure après, 10 à 2000 % en poids - de préférence 50 à 500 % en poids - calculé sur la quantité totale d'amino-organosilane (III) et éventuellement d'agent de réticulation, d'un solvant usuel largement insoluble dans l'eau mais qui dissout le mélange réactionnel gélifié, et
on homogénéise,
on additionne le produit homogénéisé visqueux immédiatement ou dans l'espace d'une heure, le cas échéant, en élevant la température mise en place originellement, de 10 à 2000 % en poids - de préférence 50 à 1000 % en poids - calculé sur la quantité totale d'amino-organosilane et le cas échéant d'agent de réticulation, d'eau,
on disperse la phase organique qui contient maintenant le siloxane dans le système à deux phases liquide, et on sépare la substance solide qui se forme sous forme de sphères après une durée de réaction suffisante pour cela, à une température allant de la température ambiante à 200°C, de la phase liquide et ensuite le cas échéant,
on extrait,
on sèche à une température allant de la température ambiante à 250°C, éventuellement sous atmosphère de gaz protecteur ou sous vide, et
on recuit pendant 1 à 100 heures à, des températures de 150° à 300°C et/ou on classifie, on fait réagir l'organosiloxamine ainsi obtenue sous forme déterminée, polymère, de formule générale : 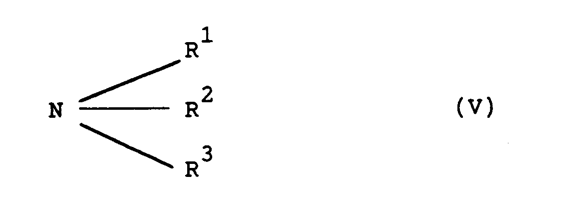 dans laquelle R¹, R² et R³ ont les mêmes significations que dans la formule (I), avec une quantité stoechiométrique, de préférence en excès,
a) d'un halogénure d'alcoyle linéaire ou ramifié contenant 1 à 20 atomes de carbone, d'un halogénure de cycloalcoyle composé de 5 à 8 atomes de carbone ou d'un halogénure de benzyle dans lequel le radical halogène est un atome de chlore, de brome ou d'iode, ou
b) d'un acide organique ou minéral protonique,
le cas échéant en présence d'un solvant ou d'un agent de solubilisation choisi dans le groupe des éthers cycliques ou à chaîne ouverte, des composés du type hydrocarbure chloré, des dérivés nitrés aliphatiques ou aromatiques, des nitriles aliphatiques ou aromatiques, des hydrocarbures aliphatiques à chaîne ouverte ou cycliques, des produits aromatiques non substitués ou substitués par des radicaux alcoyle, des alcools linéaires ou ramifiés ayant de 1 à 12 atomes de carbone et des cétones symétriques ou asymétriques ayant de 3 à 8 atomes de carbone, ou de diméthylformamide, de diméthylsulfoxyde ou d'eau, à des températures allant de la température ambiante à 250°C, et à une pression qui correspond à la somme des pressions partielles des composants du mélange réactionnel, à la température correspondante la réaction ayant une durée allant de quelques minutes à plusieurs jours,
on débarrasse l'organosiloxane contenant des groupes ammonium polymères formés, présentant une forme déterminée, des composés gazeux, le cas échéant en premier lieu, puis
on sépare de la phase liquide après des opérations de purification courantes,
on lave ou extrait avec un des solvants mentionnés ou avec de l'eau,
on traite le cas échéant dans le solvant à une température augmentée,
on sèche le produit séparé du solvant à pression normale, sous vide ou sous atmosphère de gaz protecteur, partiellement ou complètement, à une température allant de la température ambiante à 250° pendant une durée de 1 à 60 heures,
on recuit de 100 à 300°C pendant une durée allant jusqu'à 100 heures, et
on classifie cependant la succession d'étapes de ces mesures de purification courantes peut subir des variations.

6. Procédé selon la revendication 5, caractérisé en ce que l'amine polymère ayant une forme déterminée de formule (V) est quaternairisée immédiatement après sa formation, humide du solvant, non séchée, avec un halogénure d'alcoyle linéaire ou ramifié composé de 1 à 20 atomes de carbone, avec un halogénure de cycloalcoyle composé de 5 à 8 atomes de carbone ou avec un halogénure de benzyle, dans lesquels le radical halogène est un atome de chlore, de brome ou d'iode.

7. Procédé selon la revendication 5 ou 6, caractérisé en ce que l'on a utilisé, comme solvant pour la formation d'un dérivé quaternaire, des alcools linéaires ou ramifiés ayant de 1 à 10 atomes de linéaires ou ramifiés ayant de 1 à 10 atomes de carbone, du toluène, de l'o-, m-, p- xylène ou un mélange de ceux-ci, ou de l'eau.

8. Procédé selon une ou plusieurs des revendications 5 à 7, caractérisé en ce que le produit sous forme quaternaire encore humide est soumis dans un solvant approprié pour la quaternairisation - qui, le cas échéant, a été acidifié par de l'haloacide à un traitement thermique pendant une durée allant jusqu'à 100 heures à des températures allant jusqu'à 200°C.

9. Procédé selon une ou plusieurs des revendications 5 à 8, caractérisé en ce que le produit digéré sous forme quaternaire, le cas échéant humide de solvant est laissé non séché après l'extraction avec de l'eau ou avec un solvant autre que celui utilisé précédemment.

10. Procédé de préparation de tels organosiloxanes contenant des groupes ammonium, ayant une forme déterminée, selon la revendication 1 ou 2, pour lesquels l'atome d'azote quaternaire est complètement substitué par des groupes organyle et X représente un anion selon la formule (I) mais cependant pas un halogénure, caractérisé en ce que l'on fait réagir un composé organosiloxane polymère, contenant des groupes ammonium ayant une forme déterminée - pour lequel l'atome d'azote quaternaire est complètement substitué par des groupes organyle et X représente un halogénure - avec un réactif minéral ou organique, qui peut se dissocier en un cation et un anion en vue d'un échange réciproque des anions, selon le principe de l'échange d'ions statique ou dynamique et à chaque fois le cas échéant on sépare de la phase liquide, on lave, on sèche, on recuit et/ou on classifie.

11. Utilisation des composés polymères renfermant des groupes ammonium, ayant une forme déterminée selon les revendications 1 à 4 comme échangeur d'ions.

12. Utilisation des composés polymères renfermant des groupes ammonium, ayant une forme déterminée, selon les revendications 1 à 4 pour l'élimination des anions métalliques des solutions.
